# EUROPEAN PATENT APPLICATION

(11) **EP 4 040 327 A1**
(43) Date of publication of application: **10.08.2022**
(21) Application number: 22154179.0
(22) Date of filing: 31.01.2022
(51) Int. Cl.: G06F 30/15, G06F 30/17, B64F 5/00, G06F 111/04, G06F 113/28, G06F 119/18

(54) **METHODS AND APPARATUS FOR DETERMINING A SHIM PROFILE FOR ASSEMBLING A FIRST PART WITH A SECOND PART**

(30) Priority: 03.02.2021 US 202163145033 P
(71) Applicant: The Boeing Company, Chicago, IL 60606-1596 (US)
(72) Inventor: RABIEGA, Marcin A., Chicago, 60606-1596 (US); BOYL-DAVIS, Theodore M., Chicago, 60606-1596 (US); COLLINS, Ronald J., Chicago, 60606-1596 (US); RHOADS, Christopher M., Chicago, 60606-1596 (US); BOROWICZ, Clifford D., Chicago, 60606-1596 (US); CHENG, Steve X., Chicago, 60606-1596 (US); ADRIANCE, Joel T., Chicago, 60606-1596 (US)
(74) Representative: Howson, Richard Giles Bentham

(57) **Abstract**

A method for determining a shim profile (250) for assembling a first mating surface (215) of a first part (210) with a second mating surface (225) of a second part (220) includes: obtaining a baseline surface model (300) of the first mating surface (215); scanning the first mating surface (215) when the first part is in a deviated configuration to generate a scan-based surface model (310) of the first mating surface (215); deforming the scan-based surface model (310) of the first mating surface (215) relative to the baseline surface model (300) of the first mating surface to generate a first deformed surface model (320) of the first mating surface; deforming the first deformed surface model (320) of the first mating surface (215) relative to a surface model (330) of the second mating surface (225) to generate a second deformed surface model (370) of the first mating surface (215); and comparing the second deformed surface model (370) of the first mating surface (215) to the surface model (330) of the second mating surface (225).

## Description

### FIELD

The present disclosure generally relates to manufacturing and, more particularly, to methods and associated apparatus for predictive shimming of gaps.

### BACKGROUND

Modern aircraft may require custom shims to fill gaps between structural components in the airframe that arise due to manufacturing tolerances. The shims are used to eliminate gaps, maintain structural performance, and minimize pull-down forces. The number of shims may rapidly add up across a large structure. Typically, the gap filling process involves manual inspection to gather measurement data used for shim fabrication. In either case, the process may amount to a significant increase in manufacturing cycle time and cost. Additionally, gathering the measurement data may be cumbersome due to the size of the component being inspected. Accordingly, those skilled in the art continue with research and development efforts in the field of predictive shimming.

### SUMMARY

Disclosed are method for determining a shim profile for assembling a first mating surface of a first part with a second mating surface of a second part.

In one example, the disclosed method includes obtaining a baseline surface model of the first mating surface of the first part. The method further includes scanning the first mating surface of the first part when the first part is in a deviated configuration to generate a scan-based surface model of the first mating surface. The method further includes deforming the scan-based surface model of the first mating surface relative to the baseline surface model of the first mating surface to generate a first deformed surface model of the first mating surface. The method further includes deforming the first deformed surface model of the first mating surface relative to a surface model of the second mating surface of the second part to generate a second deformed surface model of the first mating surface. The method further includes comparing the second deformed surface model of the first mating surface to the surface model of the second mating surface.

Also disclosed are apparatus for determining a shim profile for assembling a first mating surface of a first part with a second mating surface of a second part.

In one example, the disclosed apparatus includes a surface model generator configured to take as input the first mating surface of the first part when the first part is in a deviated configuration to generate a scan-based surface model of the first mating surface. The apparatus further includes an analyzer configured to deform the scan-based surface model of the first mating surface relative to a baseline surface model of the first mating surface to generate a first deformed surface model of the first mating surface. The analyzer is further configured to deform the first deformed surface model of the first mating surface relative to a surface model of the second mating surface of the second part to generate a second deformed surface model of the first mating surface. The analyzer is further configured to compare the second deformed surface model of the first mating surface to the surface model of the second mating surface. Other examples of the disclosed methods and apparatus will become apparent from the following detailed description, the accompanying drawings and the appended claims.

### BRIEF DESCRIPTION OF THE DRAWINGS

Fig. 1 is a flowchart of a method for determining a shim profile;
Fig. 2 is a block diagram of an apparatus for determining a shim profile;
Fig. 3 is a perspective view of an apparatus for determining a shim profile;
Fig. 4 is a perspective view of a part to be scanned by the apparatus of Fig. 2;
Fig. 5 is a perspective view of a surface model generated by the apparatus of Fig. 2;
Fig. 6 is a perspective view of a shim profile generated by the apparatus of Fig. 2;
Fig. 7 is a schematic illustration of an aircraft; and
Fig. 8 is a block diagram of aircraft production and service methodology.

### DETAILED DESCRIPTION

The following detailed description refers to the accompanying drawings, which illustrate specific examples described by the present disclosure. Other examples having different structures and operations do not depart from the scope of the present disclosure. Like reference numerals may refer to the same feature, element, or component in the different drawings.

Illustrative, non-exhaustive examples, which may be, but are not necessarily, claimed, of the subject matter according the present disclosure are provided below. Reference herein to "example" means that one or more feature, structure, element, component, characteristic, and/or operational step described in connection with the example is included in at least one embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

The present disclosure recognizes that during assembly of an aircraft, gaps may be formed between mating surfaces of parts of an airframe due to manufacturing tolerances. Shims may be fabricated and placed within gaps that have dimensions outside of a predetermined tolerance. However, the geometry of the gaps and corresponding shims may vary across the part, and thus each shim location may need to be inspected and each gap may need to be measured prior to fabrication of the shim. Accordingly, it is desirable to quickly and accurately identify shim gaps and fabricate shims.

The present disclosure recognizes that an inspection tool is typically brought into a manufacturing area to inspect parts. Set-up and operation of the inspection tool add time and cost to the manufacturing cycle. Inspection of the shim locations and fabrication of the shims require accurate measurements, which further add to the time and cost of the manufacturing cycle. Accordingly, it is desirable to reduce the time and cost associated with inspecting the part and fabricating the shims.

The present disclosure recognizes that prediction of gaps that need to be filled may enable shims to be fabricated prior to assembly of the aircraft parts. Prediction of gaps and corresponding shims may reduce at least one of manufacturing time and cost and may result in a more automated process. However, predictive shimming requires a high degree of scanning accuracy. Accordingly, it is desirable to obtain highly accurate and dense scan data of one or both mating parts.

The present disclosure recognizes that obtaining desirably accurate scan data may become challenging for very large parts or for parts having varying geometries. For example, conventional inspection tools may be limited in their reach. To inspect large parts, the inspection tool may need to be moved to different locations relative to the part or additional inspection tools may be needed to completely scan the part. Each additional set-up may add manufacturing cycle time to the part. Additionally, multiple set-ups may result in inconsistent scan data as the part may change geometry to a deviated configuration. Accordingly, it is desirable to quickly and accurately obtain scan data for a large part.

The present disclosure recognizes that the accuracy of scan data obtained by a conventional inspection tool, such as a laser scanner, reduces as the distance of location being scanned increases from the inspection tool. Accordingly, it is desirable to maintain an optimal and consistent distance between the scanned location and the inspection tool.

Shimming large flexible structures to extremely tight tolerances (<0.005") is typically costly and time-consuming. The disclosed method allows the metrology data to get smoothed and deformed in several stages to better isolate the variation of the surface, in contrast to variation induced by the support condition during scanning. Said parts also have inherent imperfections in the surface which must be accounted for from the as-built condition. Further, the disclosed method addresses a desire to isolate any intrinsic imperfections from the as-built condition.

A method for determining a shim profile for assembling a first mating surface of a first part with a second mating surface of a second part is disclosed. Within examples, the method includes (i) obtaining a first baseline surface model of the first mating surface of the first part; (ii) scanning the first mating surface of the first part when the first part is in a deviated configuration to generate a first scan-based surface model of the first mating surface; (iii) deforming the first scan-based surface model of the first mating surface relative to the first baseline surface model of the first mating surface to generate a first deformed surface model of the first mating surface; (iv) deforming the first deformed surface model of the first mating surface relative to a surface model of the second mating surface of the second part to generate a secondary deformed surface model of the first mating surface; and (v) comparing the secondary deformed surface model of the first mating surface to the surface model of the second mating surface.

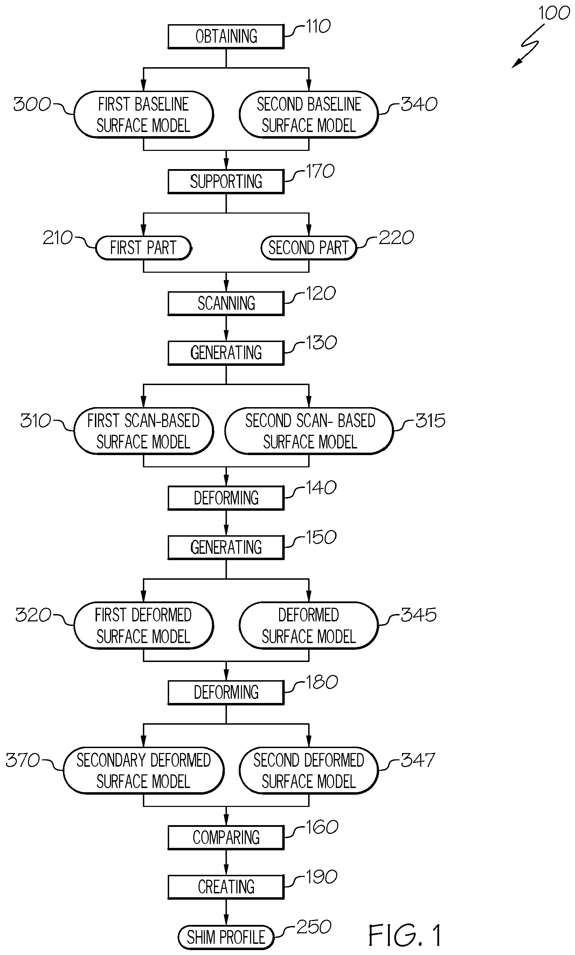

Fig. 1 illustrates a flow diagram of an exemplary method 100 for determining a shim profile 250. A method 100 for determining a shim profile 250 for assembling a first mating surface 215 of a first part 210 with a second mating surface 225 of a second part 220 is disclosed. The method 100 comprises obtaining 110. In one or more examples, the obtaining 110 comprises obtaining 110 a first baseline surface model 300 of the first mating surface 215 of the first part 210. The first baseline surface model 300 is a virtual (e.g., digital) representation of the actual geometry of the first mating surface 215 of the first part 210. In an example, the first baseline surface model 300 comprises a CAD model. In another example, the first baseline surface model 300 comprises a scan of the first mating surface 215. In yet another example, the first baseline surface model 300 comprises both a CAD model and a scan of the first mating surface 215.

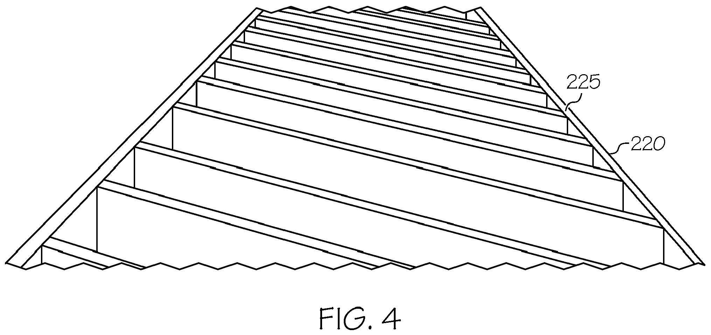

Referring to Fig. 1, in one or more examples, the obtaining 110 also comprises obtaining 110 a second baseline surface model 340 of the second mating surface 225 of the second part 220. The second baseline surface model 340 is a virtual (e.g., digital) representation of the actual geometry of the second mating surface 225 of the second part 220. In an example, the second baseline surface model 340 comprises a CAD model. In another example, the second baseline surface model 340 comprises a scan of the second mating surface 225. In yet another example, the second baseline surface model 340 comprises both a CAD model and a scan of the second mating surface 225. In one or more examples, see Fig. 4, the second part 220 comprises a ladder configuration.

Referring to Fig. 1, the method 100 comprises scanning 120. In one or more examples, scanning 120 comprises scanning 120 the first mating surface 215 of the first part 210 when the first part 210 is in a deviated configuration, meaning the geometry of first part 210 changed between when the first part 210 was initially formed and where it is currently located for scanning 120. In one example, gravity may cause the first part 210 to conform to a deviated configuration during the process of moving the first part 210 from one location to another. In another example, variations in geometry of each location that the first part 210 is located may cause the first part 210 to conform to a deviated configuration.

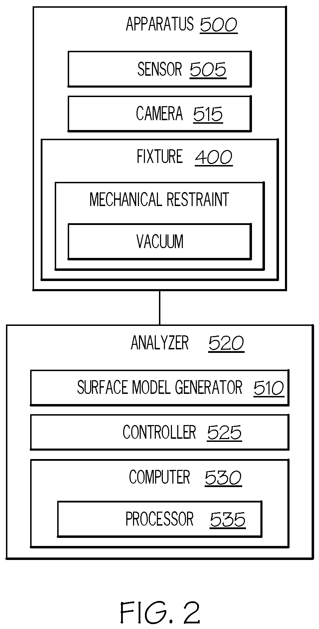

In one or more examples, the method 100 comprises generating 130 a first scan-based surface model 310 of the first mating surface 215 based on the scanning 120. In an example, the first scan-based surface model 310 of the first mating surface 215 comprises a point cloud. Referring to Fig. 2, in one or more examples, scanning 120 comprises utilizing an apparatus 500 for determining a shim profile 250 for assembling the first mating surface 215 of the first part 210 with the second mating surface 225 of a second part 220. In one or more examples, the apparatus 500 comprises a surface model generator 510 and an analyzer 520.

Referring to Fig. 1, in one or more examples, the scanning 120 comprises scanning 120 the second mating surface 225 of the second part 220 when the second part 220 is in a deviated configuration, meaning the geometry of second part 220 changed between when the second part 220 was initially formed and where it is currently located for scanning 120. In one or more examples, the method 100 comprises generating 130 a second scan-based surface model 315 of the second mating surface 225 based on the scanning 120. In one or more examples, the second scan-based surface model 315 of the second mating surface 225 comprises a point cloud.

Referring to Fig. 1, the method 100 comprises deforming 140. In one or more examples, the deforming 140 comprises deforming 140 the first scan-based surface model 310 of the first mating surface 215 of the first part 210 relative to the first baseline surface model 300 of the first mating surface 215 of the first part 210. The deforming 140 the first scan-based surface model 310 of the first mating surface 215 relative to the first baseline surface model 300 of the first mating surface 215 may include performing any algorithm or process intended to simulate the physical response of a flexible part. As one specific, non-limiting example, the deforming 140 the first scan-based surface model 310 of the first mating surface 215 relative to the first baseline surface model 300 of the first mating surface 215 comprises applying a continuous mathematical function model. As another specific, non-limiting example, the deforming 140 the first scan-based surface model 310 of the first mating surface 215 relative to the first baseline surface model 300 of the first mating surface 215 comprises performing finite element analysis.

Referring to Fig. 1, in one or more examples, the deforming 140 comprises deforming 140 the second scan-based surface model 315 relative to the second baseline surface model 340 of the second mating surface 225. Deforming 140 the second scan-based surface model 315 relative to the second baseline surface model 340 of the second mating surface 225 provides an accurate model of the actual spacing between the first part 210 and the second part 220, thus assisting in reaching the overall goal of generating a shim profile 250. In one example, the deforming 140 the second scan-based surface model 315 relative to the second baseline surface model 340 of the second mating surface 225 includes performing any algorithm or process intended to simulate the physical response of a flexible part. As one specific, non-limiting example, the deforming 140 the second scan-based surface model 315 relative to the second baseline surface model 340 of the second mating surface 225 comprises applying a continuous mathematical function model. As another specific, non-limiting example, the deforming 140 the second scan-based surface model 315 relative to the second baseline surface model 340 of the second mating surface 225 comprises performing finite element analysis.

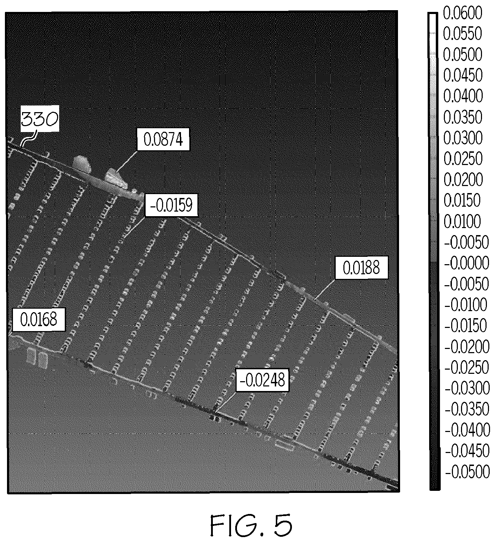

Referring to Fig. 1, in one or more examples, the method 100 comprises generating 150. In one or more examples, the method 100 comprises generating 150 a first deformed surface model 320 of the first mating surface 215 of the first part 210. As discussed below, this first deformed surface model 320 can thereafter be deformed relative to a surface model 330, Fig. 5, of the second mating surface 225 of the second part 220 to generate a secondary deformed surface model 370 of the first mating surface 215. In one example, the method 100 comprises generating 150 a deformed surface model 345 of the second mating surface 225 of the second part 220. In another example, the generating 150 comprises generating 150 a first deformed surface model 320 of the first mating surface 215 and a deformed surface model 345 of the second mating surface 225. Generating 150 yields initial deformed surface models of each respective part to assist in generating a shim profile 250 and isolating intrinsic imperfections from the as-built condition of each part.

Referring to Fig. 1, the method 100 comprises deforming 180. In one or more examples, the deforming 180 comprises deforming 180 the first deformed surface model 320 of the first mating surface 215 relative to a surface model 330, see FIG. 5, of the second mating surface 225 of the second part 220 to generate a secondary deformed surface model 370 of the first mating surface 215. As discussed below, this generated secondary deformed surface model 370 can then be compared to the surface model 330 of the second mating surface 225. In an example, the surface model 330 of the second mating surface 225 of the second part 220 is a second baseline surface model 340 of the second mating surface 225. In another example, the surface model 330 of the second mating surface 225 of the second part 220 is a second scan-based surface model 315 of the second mating surface 225. In yet another example, the surface model 330 of the second mating surface 225 of the second part 220 is a deformed surface model 345 of the second mating surface 225. In still yet another example, the surface model 330 of the second mating surface 225 of the second part 220 is a second deformed surface model 347 of the second mating surface 225.

Referring to Fig. 1, in one or more examples, the deforming 180 comprises deforming 180 the deformed surface model 345 of the second mating surface 225 of the second part 220 relative to a first surface model of the first part 210 to generate a second deformed surface model 347 of the second mating surface 225 of the second part 220. In an example, the first surface model of the first part 210 is the first deformed surface model 320 of the first mating surface 215 of the first part 210. In another example, the first surface model of the first part 210 is the first baseline surface model 300.

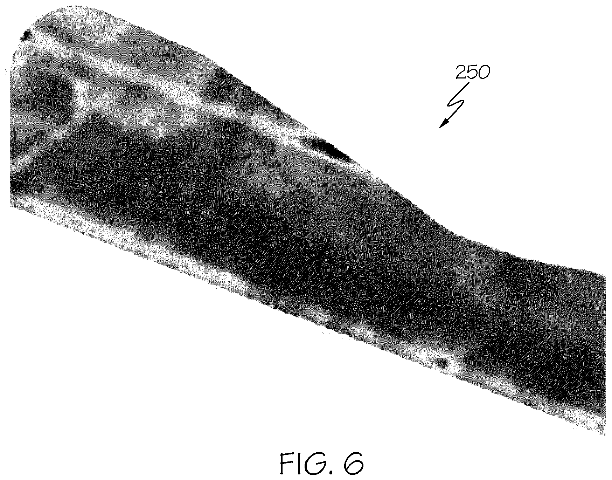

Referring to Fig. 1, the method 100 comprises comparing 160. In one or more examples, the comparing 160 comprises comparing 160 the secondary deformed surface model 370 of the first mating surface 215 to the surface model 330, Fig. 5, of the second mating surface 225. As discussed in more detail below, in an example, a shim profile 250, Fig. 6, can be created based on the comparing 160 the secondary deformed surface model 370 of the first mating surface 215 to the surface model 330 of the second mating surface 225. In an example, the surface model 330 is a second baseline surface model 340. In another example, the surface model 330 is a second scan-based surface model 315. In yet another example, the surface model 330 is a deformed surface model 345. In still yet another example, the surface model 330 is a second deformed surface model 347.

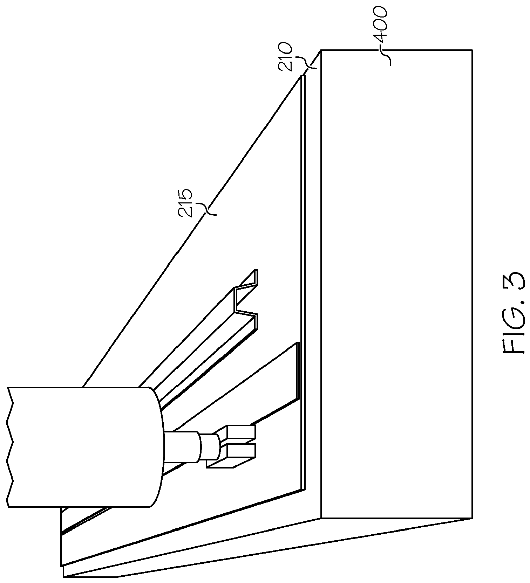

Referring to Fig. 1, in one or more examples, the method 100 comprises supporting 170 the first part 210 on a fixture 400, see Fig. 2 and Fig. 3, prior to the scanning 120 of the first mating surface 215 of the first part 210. In one or more examples, the fixture 400 comprises a mechanical restraint to at least partially secure the first part 210 to the fixture 400. In one or more examples, the mechanical restraint comprises vacuum suction. The first part 210 may be in a deviated configuration when supported on fixture 400.

Referring to Fig. 1, in one or more examples, the method 100 comprises supporting 170 the second part 220 on a fixture 400, see Fig. 2, prior to the scanning 120 of the second mating surface 225 of the second part 220. In one or more examples, the fixture 400 comprises a mechanical restraint to at least partially secure the second part 220 to the fixture 400. In one or more examples, the mechanical restraint comprises vacuum suction. The second part 220 may be in a deviated configuration when supported on fixture 400.

As mentioned above, in an example the surface model 330, Fig. 5, of the second mating surface 225 of the second part 220 is a deformed surface model 345 of the second mating surface 225. In one or more examples, the deformed surface model 345 of the second mating surface 225 is obtained by the scanning 120 the second mating surface 225 of the second part 220 when the second part 220 is in a deviated configuration to obtain a second scan-based surface model 315 of the second mating surface 225. The deformed surface model 345 of the second mating surface 225 is further obtained by deforming 140 the second scan-based surface model 315 of the second mating surface 225 relative to a second baseline surface model 340 of the second mating surface 225.

As mentioned above, in an example the surface model 330, Fig. 5, of the second mating surface 225 of the second part 220 is a second deformed surface model 347 of the second mating surface 225. In an example, the second deformed surface model 347 of the second mating surface 225 is obtained by scanning the second mating surface 225 of the second part 220 when the second part 220 is in a deviated configuration to obtain a second scan-based surface model 315 of the second mating surface 225.

Referring to Fig. 1, in one or more examples, a second deformed surface model 347 of the second mating surface 225 is obtained by deforming 140 the second scan-based surface model 315 of the second mating surface 225 relative to a second baseline surface model 340 of the second mating surface 225. In an example, the second baseline surface model 340 of the second mating surface 225 comprises a CAD model. In another example, the second baseline surface model 340 of the second mating surface 225 comprises a scan of the second mating surface 225. In yet another example, the second baseline surface model 340 of the second mating surface 225 comprises a CAD model and a scan of the second mating surface 225.

Referring to Fig. 1, in one or more examples, the second deformed surface model 347 of the second mating surface 225 is obtained by deforming 180 the deformed surface model 345 of the second mating surface 225 relative to the first deformed surface model 320 of the first mating surface 215 of the first part 210 to generate the second deformed surface model 347 of the second mating surface 225.

Referring to Fig. 1, in one or more examples, the method 100 further comprises creating 190 the shim profile 250 based on the comparing 160 the secondary deformed surface model 370 of the first mating surface 215 to the surface model 330 of the second mating surface 225. The shim profile 250, see Fig. 6, represents intrinsic imperfections, differences, and gaps present between the first mating surface 215 and the second mating surface 225 upon completion of the steps of method 100. In one or more examples, the method 100 further comprises manufacturing one or more shim based on the shim profile 250.

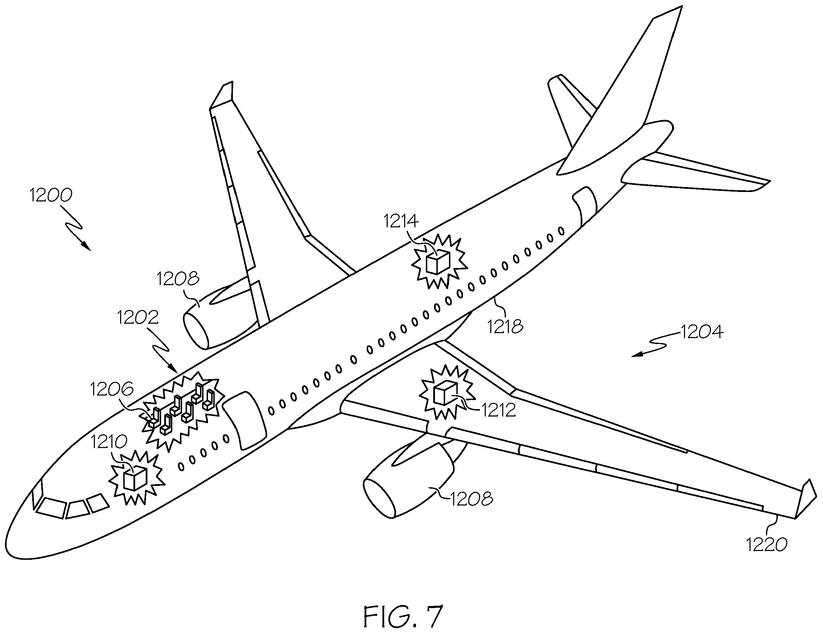

Referring to Fig. 7, in one or more examples, the first part 210 and the second part 220 are both components of an aircraft 1200. In one or more examples, the first part 210 is a skin panel of a wing of an aircraft 1200 and the second part 220 is a frame structure of the wing of the aircraft 1200.

Referring to Fig. 2, in one or more examples, disclosed is an apparatus 500 for determining a shim profile 250, Fig. 6, for assembling a first mating surface of a first part with a second mating surface of a second part. The apparatus is coupled with a controller 525 that is configured to control operation of the components of apparatus 500 based upon instruction from an operator or numerical control program. The apparatus 500 comprises at least one camera 515 configured to obtain images and data of the first mating surface 215 and the second mating surface 225. The at least one camera 515 is configured to move along an X-axis, Y-axis, and Z-axis to obtain images and data of the first part 210 and second part 220. In one or more examples, the apparatus 500 comprises at least one sensor 505 configured to determine the location of at least the first part 210, the second part 220, the at least one camera 515, and a fixture 400 supporting at least one of the first part 210 and the second part 220. The at least one sensor 505 includes at least one of an encoder, a machine vision system, an optical sensor, a pressure sensor, and the like.

Referring to Fig. 2, in one or more examples, the apparatus 500 comprises a surface model generator configured to take as input the images captured by the at least one camera 515 of the first mating surface 215 of the first part 210 when the first part 210 is in a deviated configuration to generate a first scan-based surface model 310 of the first mating surface 215. In one or more examples, the surface model generator is configured to take as input the images captured by the at least one camera 515 of the second mating surface 225 of the second part 220 when the second part 220 is in a deviated configuration to generate a second scan-based surface model 315 of the second mating surface 225. In one or more examples, the surface model generator 510 generates CAD models.

Referring to Fig. 1 and Fig. 2, in one or more examples, the apparatus 500 comprises an analyzer 520 configured to deform the first scan-based surface model 310 of the first mating surface 215 relative to a first baseline surface model 300 of the first mating surface 215 to generate a first deformed surface model 320 of the first mating surface 215. In one or more examples, the analyzer 520 is configured to deform the second scan-based surface model 315 of the second mating surface 225 relative to a second baseline surface model 340 of the second mating surface 225 to generate a deformed surface model 345 of the second mating surface 225. In one or more examples, the analyzer 520 is configured to perform structural analysis using the first baseline surface model 300 of the first mating surface 215 to identify a predicted final shape of the mated flexible surface between the first part 210 and the second part 220 within selected tolerances to determine the shim profile 250.

Referring to Fig. 1 and Fig. 2, in one or more examples, the analyzer 520 is configured to refine or deform the first deformed surface model 320 of the first mating surface 215 relative to a surface model 330 of the second mating surface 225 of the second part 220 to generate a secondary deformed surface model 370 of the first mating surface 215. The analyzer 520 is further configured to refine or deform the deformed surface model 345 of the second mating surface 225 relative to the first deformed surface model 320 of the first mating surface 215 of the first part 210 to generate a second deformed surface model 347 of the second mating surface 225.

Referring to Fig. 1 and Fig. 2, in one or more examples, the analyzer 520 is configured to compare the secondary deformed surface model 370 of the first mating surface 215 to the surface model 330 of the second mating surface 225. In one or more examples, the analyzer 520 of the apparatus 500 is configured to generate the shim profile 250, Fig. 6, based on a comparison of the secondary deformed surface model 370 of the first mating surface 215 to the surface model 330 of the second mating surface. The analyzer 520 utilizes a computer 530 and processor 535 to generate the shim profile 250 based upon comparison of the secondary deformed surface model 370 to the surface model 330. The processor 535 is configured to align the secondary deformed surface model 370 with the surface model 330 and determine gaps to define the shim profile 250. In one or more examples, the processor 535 is configured to calculate displacement or gaps between the compared surfaces based upon fixed points on each respective surface as compared to their respective baseline surface models and fitting a curve to the measured points, or point cloud, collected during scanning and deforming steps.

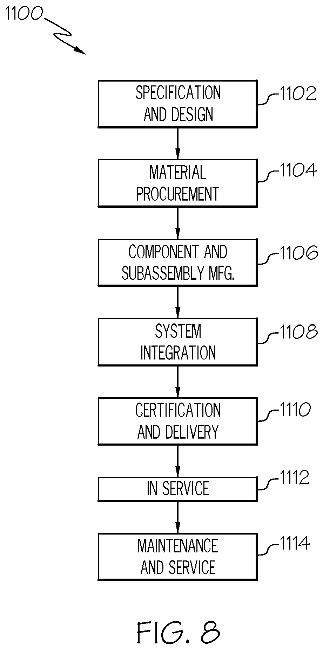

Examples of the subject matter disclosed herein may be described in the context of aircraft manufacturing and service method 1100 as shown in Fig. 8 and aircraft 1200 as shown in Fig. 7. During pre-production, illustrative method 1100 may include specification and design (block 1102) of aircraft 1200 and material procurement (block 1104). During production, component and subassembly manufacturing (block 1106) and system integration (block 1108) of aircraft 1200 may take place. Thereafter, aircraft 1200 may go through certification and delivery (block 1110) to be placed in service (block 1112). While in service, aircraft 1200 may be scheduled for routine maintenance and service (block 1114). Routine maintenance and service may include modification, reconfiguration, refurbishment, etc. of one or more systems of aircraft 1200.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 7, aircraft 1200 produced by illustrative method 1100 may include airframe 1202 that includes a fuselage 1218 and wings 1220, as well as a plurality of high-level systems 1204 and an interior 1206. Examples of high-level systems 1204 include one or more of propulsion system 1208, electrical system 1210, hydraulic system 1212, and environmental system 1214. Any number of other systems may be included. Although an aerospace example is shown, the principles disclosed herein may be applied to other industries, such as the automotive industry. Accordingly, in addition to aircraft 1200, the principles disclosed herein may apply to other vehicles, e.g., land vehicles, marine vehicles, space vehicles, etc.

Apparatus(es) and method(s) shown or described herein may be employed during any one or more of the stages of the manufacturing and service method 1100. For example, components or subassemblies corresponding to component and subassembly manufacturing (block 1106) may be fabricated or manufactured in a manner similar to components or subassemblies produced while aircraft 1200 is in service (block 1112). Also, one or more examples of the apparatus(es), method(s), or combination thereof may be utilized during production stages (block 1106 and block 1108), for example, by substantially expediting assembly of or reducing the cost of aircraft 1200. Similarly, one or more examples of the apparatus or method realizations, or a combination thereof, may be utilized, for example and without limitation, while aircraft 1200 is in service (block 1112) and/or during maintenance and service (block 1114).

As mentioned above, the disclosed method allows metrology data to get smoothed and deformed in several stages to better isolate the variation of the surface, in contrast to variation induced by the support condition during scanning. The method further introduces an interim step of deforming the scan data to a known, or scanned, condition before deforming it again to the assembly. This allowed for isolation of the gaps in assembly by means of a digital tool.

Further, the use of more than one deformation step allows for isolation of intrinsic imperfections from the as-built conditions of each respective part. Isolation can be achieved by use of a nominal CAD model. The use of more than one deformation step assists to isolate the required shim definition such that it only accounts for the local imperfections, thus reducing the effect of the macro springback deformations. Further, this data is deformed to a scan data set that is fully supported on a surface that matches the aerosurface requirements of the respective parts. The disclosed method effectively pulls the data back into contour, capturing the local surface imperfections while restraining the panel to the aero contour, or what it will be in assembly.

Different examples of the apparatus(es) and method(s) disclosed herein include a variety of components, features, and functionalities. It should be understood that the various examples of the apparatus(es) and method(s), disclosed herein, may include any of the components, features, and functionalities of any of the other examples of the apparatus(es) and method(s) disclosed herein in any combination.

Many modifications of examples, set forth herein, will come to mind of one skilled in the art, having the benefit of the teachings, presented in the foregoing descriptions and the associated drawings.

Further, the disclosure comprises embodiments according to the following clauses:
Clause 1. A method for determining a shim profile for assembling a first mating surface of a first part with a second mating surface of a second part, the method comprising:
   obtaining a first baseline surface model of the first mating surface of the first part;
   scanning the first mating of the first part when the first part is in a deviated configuration to generate a first scan-based surface model of the first mating surface;
   deforming the first scan-based surface model of the first mating surface relative to the first baseline surface model of the first mating surface to generate a first deformed surface model of the first mating surface;
   deforming the first deformed surface model of the first mating surface relative to a surface model of the second mating surface of the second part to generate a secondary deformed surface model of the first mating surface; and
   comparing the secondary deformed surface model of the first mating surface to the surface model of the second mating surface.
Clause 2. The method of Clause 1 wherein the first baseline surface model comprises a CAD model.
Clause 3. The method of Clause 1 wherein the first baseline surface model comprises a scan of the first mating surface.
Clause 4. The method of Clause 1 wherein the first baseline surface model comprises a CAD model and a scan of the first mating surface.
Clause 5. The method of any of Clauses 1 to 4 wherein the first scan-based surface model of the first mating surface comprises a point cloud.
Clause 6. The method of any of Clauses 1 to 5 further comprising supporting the first part on a fixture prior to the scanning of the first mating surface of the first part.
Clause 7. The method of Clause 6 wherein the fixture comprises a mechanical restraint to at least partially secure the first part to the fixture.
Clause 8. The method of Clause 7 wherein the mechanical restraint comprises vacuum suction.
Clause 9. The method of any of Clauses 1 to 8 wherein the surface model of the second mating surface of the second part is a second baseline surface model of the second mating surface.
Clause 10. The method of any of Clauses 1 to 8 wherein the surface model of the second mating surface of the second part is a second scan-based surface model of the second mating surface, and wherein the second scan-based surface model of the second mating surface is obtained by scanning the second mating surface.
Clause 11. The method of Clause 10 wherein the second scan-based surface model of the second mating surface of the second part comprises a point cloud.
Clause 12. The method of any of Clauses 1 to 8 wherein the surface model of the second mating surface of the second part is a deformed surface model of the second mating surface, and wherein the deformed surface model of the second mating surface is obtained by:
   scanning the second mating surface of the second part when the second part is in a deviated configuration to obtain a second scan-based surface model of the second mating surface; and
   deforming the second scan-based surface model of the second mating surface relative to a second baseline surface model of the second mating surface.
Clause 13. The method of any of Clauses 1 to 8 wherein the surface model of the second mating surface of the second part is a second deformed surface model of the second mating surface, and wherein the second deformed surface model of the second mating surface is obtained by:
   scanning the second mating surface of the second part when the second part is in a deviated configuration to obtain a second scan-based surface model of the second mating surface;
   deforming the second scan-based surface model of the second mating surface relative to a second baseline surface model of the second mating surface to obtain a deformed surface model; and
   deforming the deformed surface model of the second mating surface relative to the first deformed surface model of the first mating surface of the first part to generate the second deformed surface model of the second mating surface.
Clause 14. The method of Clause 13 wherein the second baseline surface model of the second mating surface comprises a CAD model.
Clause 15. The method of Clause 13 wherein the second baseline surface model of the second mating surface comprises a scan of the second mating surface.
Clause 16. The method of Clause 13 wherein the second baseline surface model of the second mating surface comprises a CAD model and a scan of the second mating surface.
Clause 17. The method of any of Clauses 1 to 16 further comprising creating the shim profile based on the comparing the secondary deformed surface model of the first mating surface to the surface model of the second mating surface.
Clause 18. The method of Clause 17 further comprising manufacturing a shim based on the shim profile.
Clause 19. The shim manufactured according to the method of Clause 18.
Clause 20. The method of any of Clauses 1 to 19 wherein the first part and the second part are both components of an aircraft.
Clause 21. The method of any of Clauses 1 to 20 wherein the first part is a skin panel of a wing of an aircraft and the second part is a frame structure of the wing of the aircraft.
Clause 22. The method of any of Clauses 1 to 8 further comprising:
   obtaining a second baseline surface model of the second mating surface of the second part;
   scanning the second mating surface of the second part when the second part is in a deviated configuration to generate a second scan-based surface model of the second mating surface;
   deforming the second scan-based surface model of the second mating surface relative to the second baseline surface model of the second mating surface to generate a deformed surface model of the second mating surface; and
   deforming the deformed surface model of the second mating surface relative to the first deformed surface model of the first mating surface of the first part to generate a second deformed surface model of the second mating surface.
Clause 23. The method of Clause 22 wherein the comparing the secondary deformed surface model of the first mating surface to the surface model of the second mating surface comprises comparing the secondary deformed surface model of the first mating surface to the second deformed surface model of the second mating surface.
Clause 24. A method for determining a shim profile for assembling a first mating surface of a first part with a second mating surface of a second part, the method comprising:
   obtaining a first baseline surface model and a second baseline surface model;
   scanning the first mating surface when the first part is in a deviated configuration to generate a first scan-based surface model of the first mating surface, and the second mating surface of when the second part is in a deviated configuration to generate a second scan-based surface model of the second mating surface;
   deforming the first scan-based surface model of the first mating surface relative to the first baseline surface model of the first mating surface to generate a first deformed surface model of the first mating surface, and the second scan-based surface model of the second mating surface relative to the second baseline surface model of the second mating surface to generate a deformed surface model of the second mating surface;
   deforming the first deformed surface model of the first mating surface relative to the deformed surface model of the second mating surface of the second part to generate a secondary deformed surface model of the first mating surface, and the deformed surface model of the second mating surface relative to the first deformed surface model of the first mating surface of the first part to generate a second deformed surface model of the second mating surface;
   comparing the secondary deformed surface model of the first mating surface to the second deformed surface model of the second mating surface; and
   creating the shim profile based on the comparing the secondary deformed surface model of the first mating surface to the second deformed surface model of the second mating surface.
Clause 25. An apparatus for determining a shim profile for assembling a first mating surface of a first part with a second mating surface of a second part, the apparatus comprising:
   a surface model generator configured to take as input the first mating surface of the first part when the first part is in a deviated configuration to generate a first scan-based surface model of the first mating surface; and
   an analyzer configured to:
      deform the first scan-based surface model of the first mating surface relative to a first baseline surface model of the first mating surface to generate a first deformed surface model of the first mating surface;
      deform the first deformed surface model of the first mating surface relative to a surface model of the second mating surface of the second part to generate a secondary deformed surface model of the first mating surface; and
      compare the secondary deformed surface model of the first mating surface to the surface model of the second mating surface.
Clause 26. The apparatus of Claim 25 Clause in the analyzer is further configured to generate the shim profile based on a comparison of the secondary deformed surface model of the first mating surface to the surface model of the second mating surface.

Therefore, it is to be understood that the subj ect matter, disclosed herein, is not to be limited to the specific examples illustrated and that modifications and other examples are intended to be included within the scope of the appended claims. Moreover, although the foregoing description and the associated drawings describe examples of the subject matter, disclosed herein, in the context of certain illustrative combinations of elements and/or functions, it should be appreciated that different combinations of elements and/or functions may be provided by alternative implementations without departing from the scope of the appended claims. Accordingly, parenthetical reference numerals in the appended claims are presented for illustrative purposes only and are not intended to limit the scope of the claimed subject matter to the specific examples provided herein.

## Claims

1. A method (100) for determining a shim profile (250) for assembling a first mating surface (215) of a first part (210) with a second mating surface (225) of a second part (220), the method (100) comprising:
obtaining (110) a first baseline surface model (300) of the first mating surface (215) of the first part (210);
scanning (120) the first mating surface (215) of the first part when the first part is in a deviated configuration to generate a first scan-based surface model (310) of the first mating surface (215);
deforming (140) the first scan-based surface model (310) of the first mating surface (215) relative to the first baseline surface model (300) of the first mating surface to generate a first deformed surface model (320) of the first mating surface;
deforming (180) the first deformed surface model (320) of the first mating surface (215) relative to a surface model (330) of the second mating surface (225) of the second part (220) to generate a secondary deformed surface model (370) of the first mating surface (215); and
comparing (160) the secondary deformed surface model (370) of the first mating surface (215) to the surface model (330) of the second mating surface (225).

2. The method of Claim 1 wherein the first baseline surface model (300) comprises a CAD model.

3. The method of Claim 1 wherein the first baseline surface model (300) comprises a scan of the first mating surface.

4. The method (100) of any of Claims 1 to 3 further comprising supporting (170) the first part (210) on a fixture (400) prior to the scanning (120) of the first mating surface (215) of the first part (210).

5. The method (100) of Claim 4 wherein the fixture (400) comprises a mechanical restraint to at least partially secure the first part (210) to the fixture (400).

6. The method (100) of any of Claims 1 to 5 wherein the surface model (330) of the second mating surface (225) of the second part (220) is a second baseline surface model (340) of the second mating surface (225).

7. The method (100) of any of Claims 1 to 5 wherein the surface model (330) of the second mating surface (225) of the second part (220) is a second scan-based surface model (315) of the second mating surface (225), and wherein the second scan-based surface model (315) of the second mating surface (225) is obtained by scanning (120) the second mating surface (225).

8. The method (100) of any of Claims 1 to 5 wherein the surface model (330) of the second mating surface (225) of the second part (220) is a deformed surface model (345) of the second mating surface (225), and wherein the deformed surface model (345) of the second mating surface (225) is obtained by:
scanning (120) the second mating surface (225) of the second part (220) when the second part (220) is in a deviated configuration to obtain a second scan-based surface model (315) of the second mating surface (225); and
deforming (140) the second scan-based surface model (315) of the second mating surface (225) relative to a second baseline surface model (340) of the second mating surface (225).

9. The method (100) of any of Claims 1 to 5 wherein the surface model (330) of the second mating surface (225) of the second part (220) is a second deformed surface model (347) of the second mating surface (225), and wherein the second deformed surface model (347) of the second mating surface (225) is obtained by:
scanning (120) the second mating surface (225) of the second part (220) when the second part (220) is in a deviated configuration to obtain a second scan-based surface model (315) of the second mating surface (225);
deforming (140) the second scan-based surface model (315) of the second mating surface (225) relative to a second baseline surface model (340) of the second mating surface (225) to obtain a deformed surface model (345); and
deforming (180) the deformed surface model (345) of the second mating surface (225) relative to the first deformed surface model (320) of the first mating surface (215) of the first part (210) to generate the second deformed surface model (347) of the second mating surface (225).

10. The method (100) of any of Claims 1 to 9 further comprising creating (190) the shim profile (250) based on the comparing (160) the secondary deformed surface model (370) of the first mating surface (215) to the surface model (330) of the second mating surface (225).

11. The method (100) of Claim 10 further comprising manufacturing a shim based on the shim profile (250).

12. The shim manufactured according to the method of Claim 11.

13. The method (100) of any of Claims 1 to 5 further comprising:
obtaining (110) a second baseline surface model (340) of the second mating surface (225) of the second part (220);
scanning (120) the second mating surface (225) of the second part (220) when the second part (220) is in a deviated configuration to generate a second scan-based surface model (315) of the second mating surface (225);
deforming (140) the second scan-based surface model (315) of the second mating surface (225) relative to the second baseline surface model (340) of the second mating surface (225) to generate a deformed surface model (345) of the second mating surface (225); and
deforming (180) the deformed surface model (345) of the second mating surface (225) relative to the first deformed surface model (320) of the first mating surface (215) of the first part (210) to generate a second deformed surface model (347) of the second mating surface (225).

14. The method (100) of Claim 13 wherein the comparing (160) the secondary deformed surface model (370) of the first mating surface (215) to the surface model (330) of the second mating surface comprises comparing (160) the secondary deformed surface model (370) of the first mating surface (215) to the second deformed surface model (347) of the second mating surface (225).

15. An apparatus (500) for determining a shim profile (250) for assembling a first mating surface (215) of a first part (210) with a second mating surface (225) of a second part (220), the apparatus (500) comprising:
a surface model generator (510) configured to take as input the first mating surface (215) of the first part (210) when the first part (210) is in a deviated configuration to generate a first scan-based surface model (310) of the first mating surface (215); and
an analyzer (520) configured to:
deform the first scan-based surface model (310) of the first mating surface (215) relative to a first baseline surface model (300) of the first mating surface (215) to generate a first deformed surface model (320) of the first mating surface (215);
deform the first deformed surface model (320) of the first mating surface (215) relative to a surface model (330) of the second mating surface (225) of the second part (220) to generate a secondary deformed surface model (370) of the first mating surface (215); and
compare the secondary deformed surface model (370) of the first mating surface (215) to the surface model (330) of the second mating surface (225).
